# DEMANDE DE BREVET EUROPEEN

(11) **EP 1 693 261 A1**
(43) Date de publication de la demande: **23.08.2006**
(21) Numéro de dépôt: 06300127.5
(22) Date de dépôt: 13.02.2006
(51) Int. Cl.: B60T 7/10, B60T 11/04, B60T 11/06

(54) **MECANISME DE COMMANDE MANUELLE D'UN FREIN DE STATIONNEMENT ET VEHICULE AUTOMOBILE EQUIPE D'UN TEL MECANISME**

(30) Priorité: 21.02.2005 FR 0501736
(71) Demandeur: PEUGEOT CITROËN AUTOMOBILES S.A., 78140 Velizy Villacoublay (FR)
(72) Inventeur: Bailleux, François, 91400, VAL D'ABIAN (FR)

(57) **Abrégé**

L'invention concerne un mécanisme de commande d'un frein de stationnement (6) d'un véhicule automobile, du type comprenant un levier (10) articulé autour d'un axe fixe et comportant une extrémité libre munie d'une poignée (12) de pivotement du levier (10) et d'un bouton de déverrouillage (13) d'un organe de maintien (15) du levier (10) en position de blocage du frein (6) et d'un prolongement relié par des moyens de liaison (17) à des moyens d'actionnement (20) reliés eux-mêmes au frein de stationnement (6) par des deuxièmes moyens de liaison (25). Le levier (10) et l'axe fixe sont solidaires de l'assise (7a) du siège (7) du conducteur et déplaçables avec ce siège (7) et l'organe de maintien (15) et les moyens d'actionnement (20) sont montés sur une partie fixe de ce véhicule.

## Description

La présente invention concerne un mécanisme de commande manuelle d'un frein de stationnement d'un véhicule automobile ainsi qu'un véhicule automobile équipé d'un tel mécanisme de commande.

Les véhicules automobiles sont équipés d'un mécanisme de commande d'un frein de stationnement, également appelé frein à main ou frein de parking, et qui est actionné par le conducteur pour immobiliser le véhicule lors d'un stationnement ou lors d'un démarrage en cote ou en freinage dynamique si il se produit une défaillance du freinage principal.

Généralement, le mécanisme comprend un levier monté pivotant autour d'un axe horizontal fixe et qui comporte, à une extrémité, une poignée de pivotement du levier et un bouton de déverrouillage d'un organe de maintien du levier en positon de blocage du frein de stationnement et, à l'autre extrémité, un prolongement relié à des moyens d'actionnement du frein de stationnement.

Le levier et l'organe de maintien forment un ensemble qui est fixé sur le plancher du véhicule en position centrale entre le siège du conducteur et celui du passager et ce levier s'étend parallèlement à l'axe longitudinal du véhicule.

Or, de plus en plus, les constructeurs de véhicules automobiles sont amenés à prévoir des rangements dans l'habitacle et à dégager l'espace central entre les deux sièges avant pour y installer des rangements et/ou des commandes.

Dans certains types de véhicules, comme les monospaces, l'espace entre les sièges avant doit être libre pour permettre aux passagers de passer de l'avant vers l'arrière ou inversement.

De plus, la position du levier entre les sièges avant présente un inconvénient pour les personnes de petite taille qui avancent leur siège au maximum car elles ont du mal à utiliser le frein de stationnement étant donné que le levier de commande est trop en arrière.

Pour éviter ces inconvénients et dégager l'espace entre les sièges avant, plusieurs solutions sont envisagées jusqu'à présent.

La première solution consiste à mettre le levier de commande associé aux mécanismes de maintien à la gauche du siège du conducteur. Mais cette disposition n'est possible que sur les véhicules très larges et dont la courbure des portes n'est pas trop importante.

Une deuxième solution consiste à remplacer le levier et l'organe de blocage par une quatrième pédale disposée sur le plancher du véhicule au-dessous du tableau de bord. Cette solution présente un inconvénient qui réside dans la difficulté d'utilisation de cette quatrième pédale dans les cas de démarrage en cote du véhicule si bien que cette solution n'est pas appréciée des conducteurs.

Une troisième solution consiste à placer sur l'assise du siège du conducteur, un ensemble formé par le levier et par l'organe de maintien de ce levier en position de blocage du frein de stationnement. Le couple de rotation exercé par le levier lors de son pivotement est transmis à des moyens d'actionnement du frein de stationnement par un câble gainé qui décrit une boucle dynamique. Cette solution présente aussi un inconvénient qui réside dans le risque de changement des efforts dans le frein de stationnement lors du déplacement du siège du conducteur à cause de la boucle dynamique du câble gainé entre le siège et les moyens d'actionnement.

En effet, le déplacement d'un câble de frein dans une boucle dynamique provoque un changement du rayon de courbure de cette boucle si bien que la gaine de ce câble évolue dans deux sens différents selon les trajectoires et une perte d'effort dans le câble ce qui n'est pas envisageable pour un frein de stationnement.

Une quatrième solution connue est un frein de stationnement électrique, mais cette solution est relativement coûteuse.

L'invention a pour but de proposer un mécanisme de commande manuelle d'un frein de stationnement d'un véhicule automobile qui, par des moyens simples et faciles à mettre en oeuvre, évite ces inconvénients et permet de dégager complètement l'espace entre les sièges avant du véhicule, tout en améliorant l'ergonomie.

L'invention a donc pour objet un mécanisme de commande manuelle d'un frein de stationnement d'un véhicule automobile, du type comprenant :
- un levier articulé autour d'un axe fixe et comportant, de part et d'autre de cet axe, d'une part, une extrémité libre munie d'une poignée de pivotement du levier autour dudit axe et d'un bouton de déverrouillage d'un organe de maintien du levier en position de blocage du frein de stationnement et, d'autre part, un prolongement relié par des premiers moyens de liaison à des moyens d'actionnement reliés eux-mêmes au frein de stationnement par des deuxièmes moyens de liaison,
caractérisé en ce que le levier et l'axe fixe sont solidaires de l'assise du siège du conducteur du véhicule et déplaçables avec ce siège et l'organe de maintien et les moyens d'actionnement sont montés sur une partie fixe de ce véhicule.

Selon d'autres caractéristiques de l'invention :
- l'organe de maintien et les moyens d'actionnement sont solidaires du plancher du véhicule,
- l'organe de maintien et les moyens d'actionnement forment un ensemble monté sur un essieu du véhicule dont les roues comportent ledit frein de stationnement,
- les premiers moyens de liaison comprennent un câble monté dans une gaine, ledit câble et ladite gaine décrivant au moins une boucle dynamique ou une forme d'oméga,
- les deuxièmes moyens de liaison comprennent deux câbles montés chacun dans une gaine,
- les moyens d'actionnement comprennent, d'une part, un bras dont une première extrémité est articulée sur un axe et dont une seconde extrémité est reliée au câble des premiers moyens de liaison et, d'autre part, un palonnier relié au bras en un point situé entre les deux extrémités et aux deuxièmes moyens de liaison,
- l'organe de maintien est formé par un secteur denté porté par le bras et par un cliquet pivotant relié au bouton de déverrouillage par un câble gainé,
- l'ensemble monté sur l'essieu comprend :
   - un fourreau muni à une extrémité d'un rebord d'accrochage d'une extrémité du premier câble des deuxièmes moyens de liaison, à une autre extrémité une ouverture de passage d'une extrémité du second câble de ces deuxièmes moyens de liaison et, entre ces extrémités, des pattes d'accrochage de la gaine du câble des premiers moyens de liaison,
   - un coulisseau monté déplaçable par coulissement dans le fourreau et comportant des dents transversales, une extrémité du coulisseau étant reliée au câble des premiers moyens de liaison et une extrémité dudit coulisseau étant reliée au second câble des deuxièmes moyens de liaison, et
   - un support fixe sur lequel est monté déplaçable par coulissement le fourreau et comportant, de part et d'autre de ce coulisseau, des éléments d'accrochage, l'une en vis à vis de l'autre, des gaines des câbles des deuxièmes moyens de liaison,
- l'organe de maintien est formé par un cliquet pivotant supporté par le fourreau et relié au bouton de déverrouillage par un câble gainé, ledit cliquet coopérant avec les dents du coulisseau.

L'invention a également pour objet un véhicule automobile, caractérisé en ce qu'il est équipé d'un mécanisme de commande manuelle d'un frein de stationnement tel que précédemment mentionné.

D'autres caractéristiques et avantages de l'invention apparaîtront à la lecture de la description qui va suivre, donnée à titre d'exemple et faite en se référant aux dessins annexés, sur lesquels :
- la Fig. 1 est une vue schématique d'un habitacle d'un véhicule automobile montrant l'implantation d'un premier mode de réalisation d'un mécanisme de commande manuelle d'un frein de stationnement, conforme à l'invention,
- la Fig. 2 est une vue latérale schématique d'un levier d'actionnement du mécanisme de commande, conforme à l'invention,
- la Fig. 3 est une vue latérale schématique du premier mode de réalisation d'un organe de maintien et des moyens d'actionnement du mécanisme de commande, conforme à l'invention,
- la Fig. 4 est une vue schématique de dessus d'un habitacle d'un véhicule automobile montrant l'implantation d'un second mode de réalisation d'un mécanisme de commande manuelle d'un frein de stationnement, conforme à l'invention,
- la Fig. 5 est une vue latérale schématique d'un organe de maintien et des moyens d'actionnement du second mode de réalisation du mécanisme de commande, conforme à l'invention,
- la Fig. 6 est une vue schématique en perspective d'un fourreau et d'un coulisseau du mécanisme de commande de la Fig. 5, et
- la Fig. 7 est une vue latérale schématique du second mode de réalisation du mécanisme de commande en position d'actionnement du frein de stationnement.

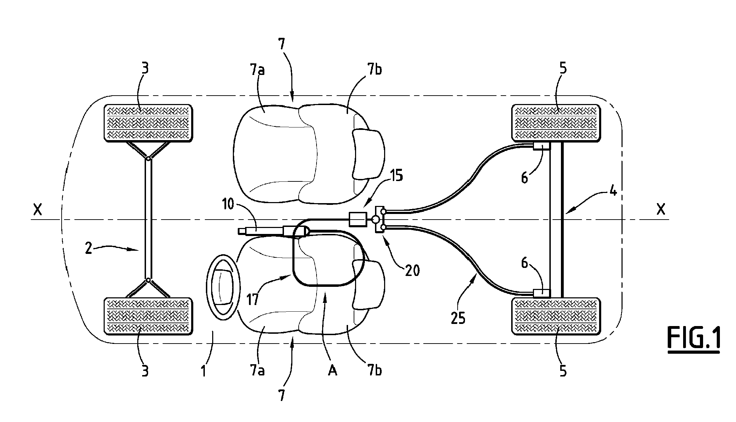

Sur la Fig. 1, on a représenté schématiquement un plancher 1 d'une caisse d'un véhicule automobile qui est supporté par un essieu avant 2 muni de deux roues 3 et un essieu arrière 4 muni de deux roues 5 pourvues chacune d'un frein de stationnement 6.

Le plancher 1 supporte, entre autres, deux sièges avant 7, respectivement un siège de conducteur situé à gauche de l'axe longitudinal XX du véhicule et un siège de passager situé à droite de cet axe longitudinal XX. Chaque siège 7 comporte, de manière classique, une assise 7a et un dossier 7b. De plus, la position de chaque siège 7 est réglable longitudinalement dans une direction parallèle à l'axe XX et est également réglable en hauteur par rapport au plancher 1.

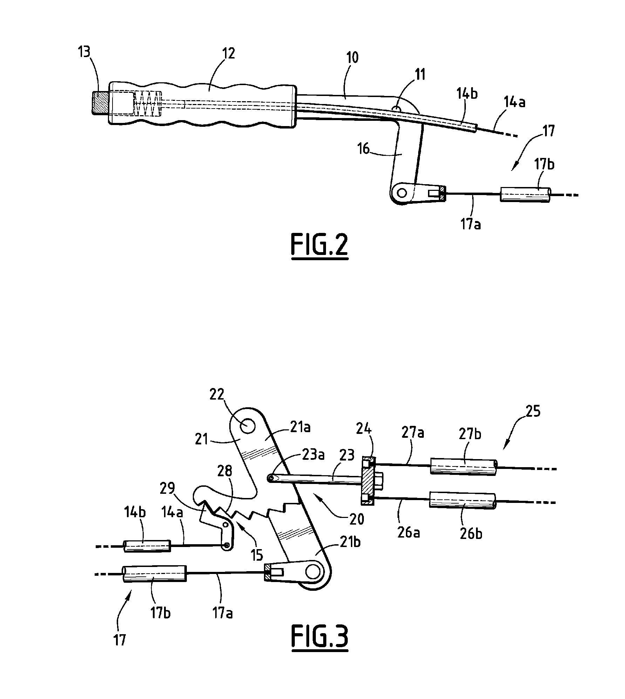

Ainsi que représenté sur les Figs. 1 et 2, le véhicule automobile est équipé d'un mécanisme de commande manuelle du frein de stationnement et qui comprend un levier 10 monté articulé autour d'un axe fixe 11 sensiblement horizontal et s'étendant perpendiculairement à l'axe longitudinal XX du véhicule. Le levier 10 comporte, à son extrémité libre, une poignée de pivotement 12 qui permet d'appliquer à la main un couple de rotation autour de l'axe 11 et de l'avant vers l'arrière du véhicule de façon à actionner les freins de stationnement 6. L'extrémité libre du levier 10 est également équipée d'un bouton poussoir 13 de déverrouillage d'un organe de maintien en position de blocage des freins de stationnement 6 et désigné dans son ensemble par la référence 15 à la Fig. 3. Le bouton de déverrouillage 13 est relié à l'organe de maintien 15 par un câble 14a disposé dans une gaine 14b.

Le levier 10 comporte également un prolongement 16 situé à l'opposé de la poignée 12 par rapport à l'axe 11 et qui est relié par des premiers moyens de liaison 17 à des moyens d'actionnement des freins de stationnement 6, ces moyens d'actionnement étant désignés à la Fig. 3 par la référence générale 20. Les premiers moyens de liaison 17 reliant le prolongement 16 du levier 10 aux moyens d'actionnement 20 sont constitués par un câble 17a monté coulissant dans une gaine 17b.

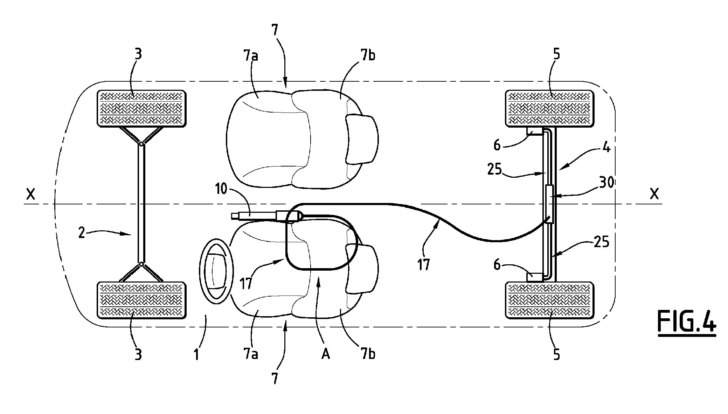

D'une manière générale et comme représenté sur les Figs. 1 et 4, le levier 10 et l'axe 11 sont solidaires de l'assise 7a du siège 7 du conducteur et sont déplaçables avec ce siège 7, aussi bien dans une direction parallèle à l'axe longitudinale XX de ce véhicule et en hauteur par rapport au plancher 1. De plus, les moyens de maintien 15 ainsi que les moyens d'actionnement 20 sont montés sur une partie fixe de ce véhicule.

Le câble 17a et sa gaine 17b reliant le levier 10 aux moyens d'actionnement 20 des freins de stationnement 6 décrivent au moins une boucle dynamique A s'étendant, de préférence, au-dessous de l'assise 7a du siège 7 du conducteur. Le câble 17a et sa gaine 17b peuvent également décrire un trajet ayant une forme d'oméga.

Selon un premier mode de réalisation représenté sur les Figs. 1 et 3, l'organe de maintien 15 et les moyens d'actionnement 20 sont solidaires du plancher 1 du véhicule automobile et les moyens d'actionnement 20 comprennent un bras 21 dont une première extrémité 21a est articulée sur un axe 22 et dont une seconde extrémité 21 b est reliée au câble 17a des premiers moyens de liaison 17. Les moyens d'actionnement 20 comprennent aussi un palonnier 24 relié au bras 21 par une tige 23 en un point 23a sur ledit bras 21 situé entre les deux extrémités 21 a et 21 b de ce bras 21. Le palonnier 24 est raccordé par les deuxièmes moyens de liaison désignés par la référence 25 aux freins de stationnement 6. Ces deuxièmes moyens de liaison 25 comprennent un premier câble 26a monté coulissant dans une gaine 26b et dont une extrémité est solidaire du palonnier 24 et dont l'autre extrémité est solidaire du frein de stationnement 6 de la roue arrière 5 gauche. Les deuxièmes moyens de liaison 25 comprennent également un second câble 27a monté coulissant dans une gaine 27b et dont une extrémité est solidaire du palonnier 24 et dont l'autre extrémité est solidaire du frein de stationnement 6 de la roue arrière 5 droite.

Dans cet exemple de réalisation, l'organe de maintien 15 est formé par un secteur denté 28 porté par le bras 21 et par un cliquet pivotant 29 relié au bouton de déverrouillage 13 par le câble 14a.

Lors d'un actionnement du levier 10 par l'intermédiaire de la poignée 12 et par rotation autour de l'axe 11, la traction exercée sur le bras 21 par l'intermédiaire du câble 17a des premiers moyens de liaison 17 a pour effet de faire pivoter ce bras 21 autour de l'axe 22. Lors du pivotement de ce bras 21, une traction est exercée sur le palonnier 24 par la tige 23 ce qui a pour effet d'exercer également une traction sur les câbles 26a et 27a entraînant ainsi un serrage des freins de stationnement 6. Le secteur denté 28 pivote également si bien que les dents de ce secteur denté 28 se déplacent sur le cliquet 29 qui assure le blocage du bras 21 et des freins de stationnement en position serrée.

Pour déverrouiller les freins de stationnement 6, il suffit à l'utilisateur d'exercer une poussée sur le bouton de déverrouillage 13 ce qui a pour effet de faire pivoter le cliquet 29 et donc de libérer le secteur denté 28 et le bras 21. Le conducteur exerce sur le levier 10 par l'intermédiaire de la poignée 12 une poussée vers le bas provoquant ainsi le pivotement du bras 21 autour de l'axe 21a par l'intermédiaire du câble 17a des premiers moyens de liaison 17. Le pivotement du bras 21 autour de l'axe 22 entraîne une libération des freins de stationnement 6 par l'intermédiaire de la tige 23, du palonnier 22 et des câbles 26a et 27a des deuxièmes moyens de liaison 25.

Dans un second mode de réalisation représenté sur les Figs. 4 à 7, le mécanisme de commande manuelle comprend, comme le précédent mode de réalisation, un levier 10 articulé autour d'un axe fixe 11. Ce levier 10 et l'axe fixe 11 sont solidaires de l'assise 7a du siège 7 du conducteur du véhicule automobile et sont déplaçables avec ce siège 7.

Par contre, dans ce mode de réalisation, le mécanisme de commande manuelle comprend un organe de maintien 15 et des moyens d'actionnement 20 qui forment un ensemble désigné par la référence générale 30, monté sur l'essieu arrière 4 du véhicule automobile.

Le câble 17a et sa gaine 17b des premiers moyens de liaison 17 forment également au moins une boucle dynamique A placée au-dessous de l'assise 7a du siège 7 du conducteur et ce câble 17a avec sa gaine 17b vont jusqu'à l'ensemble 30 disposé sur l'essieu 4, comme représenté à la Fig. 4. De préférence, le câble 14a et sa gaine 14b reliant le bouton poussoir 13 du levier 10 avec l'organe de maintien 15 également placé sur l'essieu 4 suivent le même trajet que les premiers moyens de liaison 17.

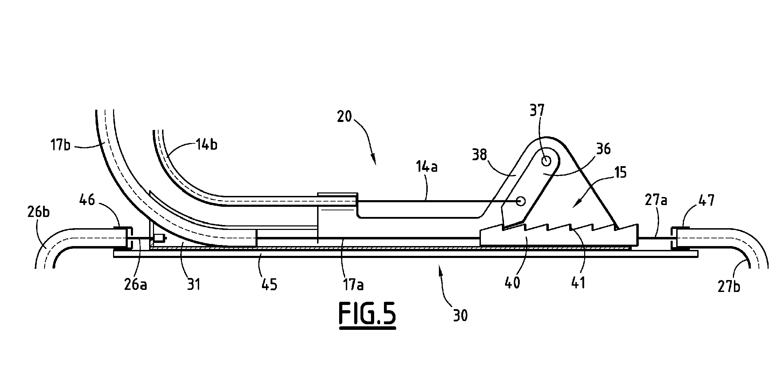

L'ensemble 30 comprenant l'organe de maintien 15 et les moyens d'actionnement 20 et représenté sur les Figs. 5 à 7, se compose d'un fourreau 31 de forme allongée, réalisé par exemple en tôle emboutie ou en alliage léger injecté ou en aluminium injecté sous pression ou en zamack ou en tout autre matériau approprié.

Le fourreau 31 comporte, à une extrémité 31a, un rebord 32 d'accrochage d'une extrémité du premier câble 26a des deuxièmes moyens de liaison 25 et dont l'autre extrémité est reliée, par exemple, au frein de stationnement 6 de la paroi arrière 5 gauche. L'autre extrémité 31 b du fourreau 31 comporte une ouverture 33 destinée au passage d'une extrémité du second câble 27a des deuxièmes moyens de liaison 25 et dont l'autre extrémité est reliée au frein de stationnement 6, par exemple, de la roue arrière 5 droite.

Le fourreau 31 est également pourvu de pattes 34 d'accrochage de la gaine 17b des premiers moyens de liaison 17 ainsi que de pattes 35 d'accrochage de la gaine 14b du câble 14a destiné à relier le bouton pressoir 13 du levier 10 à l'organe de maintien 15 de ce levier 10 en position de blocage des freins de stationnement 6.

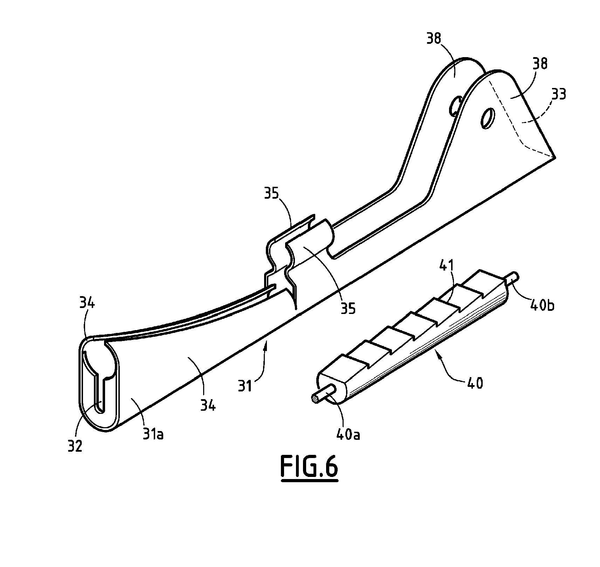

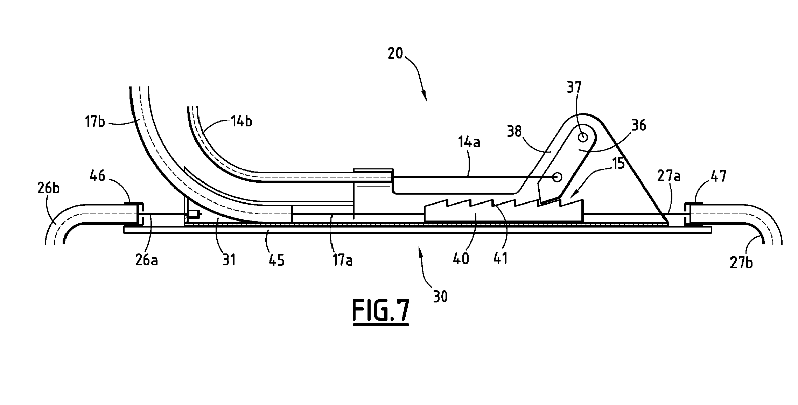

Comme montré plus particulièrement sur les Figs. 6 et 7, cet organe de maintien 15 est formé par un cliquet 36 pivotant autour d'un axe 37 sensiblement horizontal et qui est fixé entre deux pattes 38 ménagées sur le fourreau 31 à proximité de l'extrémité 31 b de ce celui-ci. Ces pattes 38 s'étendent vers le haut et ménagent entres elles un espace permettant le déplacement du cliquet 36 qui est relié à une extrémité du câble 14a.

L'ensemble 30 comporte également un coulisseau 40 monté déplaçable par coulissement dans le fourreau 31 et qui a la forme d'un demi-cylindre comportant une face plane munie d'une succession de dents transversales 41. Le coulisseau 40 comporte une première extrémité 40a solidaire du câble 17a fixé au levier 10 et une seconde extrémité 40b solidaire du câble 27a relié au frein de stationnement 6 de la roue arrière 5 droite.

Enfin, l'ensemble 30 comprend également un support 45 (Figs. 5 et 7) fixé sur l'essieu arrière 4 et s'étendant dans une direction transversale perpendiculaire à l'axe longitudinal XX du véhicule. Le support 45 a une forme appropriée et est destiné à porter le fourreau 31 et à permettre à celui-ci de se déplacer par coulissement lors du pivotement du levier 10, comme on le verra ultérieurement.

Le support 45 comporte, à l'une de ses extrémités, des éléments 46 d'accrochage de la gaine 26b du câble 26a et, à l'autre de ses extrémités, des éléments 47 d'accrochage de la gaine 27b du câble 27. Les gaines 26b et 27b des câbles respectivement 26a et 27a, sont donc placées en vis à vis l'une de l'autre et les câbles 26a et 27a débouchent dans le fourreau 31 l'un en face de l'autre.

Lors d'un actionnement du levier 10 par rotation autour de l'axe 11, la traction ainsi exercée sur le câble 17a provoque le déplacement du coulisseau 40 dans le fourreau 31.

Le déplacement de ce coulisseau 40 a pour effet d'exercer une traction sur le câble 27a entraînant, de ce fait, le serrage du frein de stationnement 6 de la roue arrière 5 droite. Simultanément, le fourreau 31 glisse sur le support 45 du fait de la réaction de la gaine 17a exercée sur ce fourreau 31 lors du déplacement du câble 17a. Le fourreau 31 se déplaçant donc dans une direction opposée au déplacement du coulisseau 40, exerce une traction sur le câble 26a entraînant ainsi un serrage du frein de stationnement 6 de la roue arrière 5 gauche. Les déplacements du fourreau 31 et du coulisseau 40 sont bien évidemment simultanés.

Au cours du déplacement du coulisseau 40, le cliquet 36 glisse sur les dents 41 et lorsque les freins de stationnement 6 sont serrés, le cliquet 36 maintien en position le coulisseau 40 et, par réaction, le fourreau 31 afin de maintenir les freins de stationnement 6 serrés, comme représenté à la Fig. 7.

Pour desserrer les freins de stationnement 6, le conducteur appuie sur le bouton poussoir 13 faisant ainsi pivoter par l'intermédiaire du câble 14a, le cliquet 36 qui libère donc le coulisseau 40 et le fourreau 31. Le basculement du levier 10 vers sa position initiale, c'est à dire vers le plancher 1 du véhicule automobile, provoque par l'intermédiaire du câble 17a et de la gaine 17b le déplacement du coulisseau 40 et du fourreau 31 qui reprennent chacun leur position initiale et libèrent les freins de stationnement 6.

Le fait de disposer l'organe de maintien de l'effort de serrage des freins de stationnement sur une partie fixe du véhicule permet de maintenir un effort constant sur ces freins de stationnement pour toutes les positions du siège dont l'assise supporte le levier d'actionnement de ces freins de stationnement.

En effet, le déplacement d'un câble de frein dans une boucle dynamique provoque un changement du rayon de courbure et donc de la longueur de la gaine qui évolue dans deux directions différentes selon les trajectoires. Par exemple, si un conducteur déplace le siège sur lequel est fixé le levier, la boucle dynamique augmente de diamètre ce qui produit une perte d'effort dans le câble de cette gaine ce qui est totalement inconcevable pour un véhicule automobile, notamment lorsqu'il est arrêté dans une pente.

Ce défaut est complètement supprimé par le mécanisme de commande selon l'invention du fait du montage de l'organe de maintien des freins en position serrée sur une partie fixe du véhicule.

Le trajet du câble reliant le bouton poussoir de déverrouillage à l'organe de maintien passe, de préférence, très près de l'axe de pivotement du levier afin d'éviter d'avoir un déplacement de la gaine de ce câble. Ce câble subit donc uniquement une flexion et il rejoint rapidement le câble principal afin de suivre la boucle dynamique décrite par ce câble.

Le mécanisme de commande manuelle selon l'invention présente également l'avantage, du fait de sa conception, de pouvoir dégager complètement l'espace entre les sièges avant du véhicule automobile et ainsi de permettre l'installation dans cet espace de rangements ou de boutons de commande.

## Revendications

1. Mécanisme de commande manuelle d'un frein de stationnement (6) d'un véhicule automobile, du type comprenant :
- un levier (10) articulé autour d'un axe fixe (11) comportant, de part et d'autre de cet axe (11), d'une part, une extrémité libre munie d'une poignée (12) de pivotement du levier (10) autour dudit axe (11) et d'un bouton de déverrouillage (13) d'un organe de maintien (15) du levier (10) en position de blocage du frein de stationnement (6) et, d'autre part, un prolongement (16) relié par des premiers moyens de liaison (17) à des moyens d'actionnement (20) reliés eux-mêmes au frein de stationnement (6) par des deuxièmes moyens de liaison (25),
**caractérisé en ce que** le levier (10) et l'axe fixe (11) sont solidaires de l'assise (7a) du siège (7) du conducteur du véhicule automobile et déplaçables avec ce siège (7) et l'organe de maintien (15) et les moyens d'actionnement (20) sont montés sur une partie fixe de ce véhicule.

2. Mécanisme selon la revendication 1, **caractérisé en ce que** l'organe de maintien (15) et les moyens d'actionnement (20) sont solidaires du plancher (1) du véhicule.

3. Mécanisme selon la revendication 1, **caractérisé en ce que** l'organe de maintien (36) et les moyens d'actionnement (20) forment un ensemble (30) monté sur un essieu (4) du véhicule dont les roues (5) comportent ledit frein de stationnement (6).

4. Mécanisme selon l'une quelconque des revendications 1 à 3, **caractérisé en ce que** les premiers moyens de liaison (17) comprennent un câble (17a) monté dans une gaine (17b), ledit câble (17a) et ladite gaine (17b) décrivant au moins une boucle dynamique ou une forme d'oméga.

5. Mécanisme selon l'une quelconque des revendications 1 à 4, **caractérisé en ce que** les deuxièmes moyens (25) de liaison comprennent deux câbles (26a, 27a) montés chacun dans une gaine (26b, 27b).

6. Mécanisme selon l'une quelconque des revendications 1, 2, 4 ou 5, **caractérisé en ce que** les moyens d'actionnement (20) comprennent, d'une part, un bras (21) dont une première extrémité (21 a) est articulée sur un axe (22) et dont une seconde extrémité (21 b) est reliée au câble (17a) des premiers moyens de liaison (17) et, d'autre part, un palonnier (24) relié au bras (21) en un point situé entre les deux extrémités (21a, 21 b) et aux deuxièmes moyens de liaison (25).

7. Mécanisme selon l'une quelconque des revendications 1, 2, 4 ou 6, **caractérisé en ce que** l'organe de maintien (15) est formé par un secteur denté (28) porté par le bras (21) et par un cliquet (29) pivotant relié au bouton de déverrouillage (13) par un câble gainé (14a, 14b).

8. Mécanisme selon l'une quelconque des revendications 1, 3 à 5, **caractérisé en ce que** l'ensemble (30) monté sur l'essieu (4) comprend :
- un fourreau (31) muni à une extrémité (31a) d'un rebord (32) d'accrochage d'une extrémité du premier câble (26a) des deuxièmes moyens de liaison (25), à une autre extrémité (31 b) d'une ouverture (33) de passage d'une extrémité du second câble (27a) de ces deuxièmes moyens (25) de liaison et des pattes (34) d'accrochage de la gaine (17b) du câble (17a) des premiers moyens de liaison (17),
- un coulisseau (40) monté déplaçable par coulissement dans le fourreau (31) et comportant des dents transversales (41), une extrémité (40a) du coulisseau (40) étant reliée au câble (17a) des premiers moyens de liaison (17) et une extrémité (40b) dudit coulisseau (40) étant reliée au second câble (27a) des deuxièmes moyens de liaison (25), et,
- un support fixe (45) sur lequel est monté déplaçable par coulissement le fourreau (31) et comportant, de part et d'autre de ce coulisseau (31), des éléments (46, 47) d'accrochage, l'une en vis à vis de l'autre, des gaines (16b, 27b) des câbles (26a, 27a) des deuxièmes moyens de liaison (25).

9. Mécanisme selon l'une quelconque des revendications 1, 3 et 8, **caractérisé en ce que** l'organe de maintien (15) est formé par un cliquet (36) pivotant supporté par le fourreau (31) et relié au bouton de déverrouillage (13) par un câble gainé (14a, 14b), ledit cliquet 36 coopérant avec les dents (41) du coulisseau (40).

10. Véhicule automobile, **caractérisé en ce qu'**il est équipé d'un mécanisme de commande manuelle d'un frein de stationnement selon l'une quelconque des revendications précédentes.
